# EUROPEAN PATENT APPLICATION

(11) **EP 4 841 117 A1**
(43) Date of publication of application: **18.11.2026**
(21) Application number: 26748840.1
(22) Date of filing: 30.01.2026
(51) Int. Cl.: F04D 29/30, F04D 29/62

(54) **METHOD FOR MANUFACTURING IMPELLER**

(30) Priority: 31.01.2025 JP 2025014942
(71) Applicant: DAIKIN INDUSTRIES, LTD., Osaka-shi, Osaka 530-0001 (JP)
(72) Inventor: MIFUNE, Yurie, Osaka-shi, Osaka 530-0001 (JP); KASHIHARA, Takashi, Osaka-shi, Osaka 530-0001 (JP); MATSUMOTO, Kazuhiro, Osaka-shi, Osaka 530-0001 (JP)
(74) Representative: Hoffmann Eitle
(86) International application number: PCT/JP2026/003438
(87) International publication number: WO 2026/164288

(57) **Abstract**

A mold (5) having a stationary mold (10), a movable mold (30), and a plurality of slide molds (40) is used in manufacturing an impeller. Each slide mold (40) has a first molding surface (41) for molding a suction surface (63s) of a blade (63) and a second molding surface (43) for molding a pressure surface (63p) of the blade (63), and is provided so as to be slidable in a return direction (d1) and a withdrawal direction (d2). In a pair of adjacent slide molds (40), the presence or absence of a slide surface (46) extending parallel to a sliding direction of the respective slide mold (40), or an area of the slide surface (46), differs between the adjacent slide molds (40) at outer surface portions (42) of the respective first molding surfaces (41) or at inner surface portions (44) of the respective second molding surfaces (43).

## Description

### TECHNICAL FIELD

The present disclosure relates to a method for manufacturing an impeller.

### BACKGROUND ART

A fan is used in a refrigeration apparatus such as an air conditioner. A centrifugal fan has been known as the fan. The centrifugal fan includes an impeller and a fan motor. The impeller has a base plate attached to the fan motor, a shroud separated from the base plate in an axial direction along an axis, and a plurality of blades provided between the base plate and the shroud. The plurality of blades are arranged at intervals in a circumferential direction about the axis of the centrifugal fan.

In the centrifugal fan, the impeller is rotated by driving the fan motor, and along with rotation of the impeller, air is sucked through a fan inlet opening formed at the center of the shroud and is blown from between the blades to the outer peripheral side. In the centrifugal fan, it is proposed that the base plate, the shroud, and the plurality of blades are made of resin so that the impeller is integrally molded by injection molding. An example of the centrifugal fan having such an impeller made of resin is disclosed in Patent Document 1.

### CITATION LIST

### PATENT DOCUMENT

Patent Document 1: Japanese Unexamined Patent Publication No. 2015-102003

### SUMMARY OF THE INVENTION

### TECHNICAL PROBLEM

In the centrifugal fan, all the blades of the impeller have the same shape in order to improve air-delivery performance. In addition, in the centrifugal fan, noise is generated as the impeller rotates. The noise includes blade-passing frequency noise, which is the wind noise generated by the airflow between the blades during rotation of the blades. The blade-passing frequency noise has a frequency represented by the product (N × Z) of the number of rotations (N) of the fan and the number of blades (Z), and is thus also called NZ noise. In the centrifugal fan, it is conceivable to dispose the plurality of blades at unequal pitches in order to reduce the NZ noise.

However, if the plurality of blades are disposed at unequal pitches in the integrally molded resin impeller described above, it is difficult to prevent interference between slide molds used to mold the blades, among molds of an injection molding apparatus, as well as interference between the slide molds and other mold components, during sliding in the withdrawal direction corresponding to a direction toward the outer peripheral side of the blades. Molds with a complicated structure are therefore needed, which increases cost. For this reason, it is difficult to manufacture the impeller of the centrifugal fan as the integrally molded resin impeller.

An object of the present disclosure is to integrally mold, from resin, an impeller for a centrifugal fan in which a plurality of blades are disposed at unequal pitches.

### SOLUTION TO THE PROBLEM

A first aspect of the present disclosure is directed to a method for manufacturing an impeller. The method is for manufacturing an impeller having: a base plate configured to rotate about a predetermined axis; an annular shroud spaced apart from the base plate in an axial direction along the axis; and a plurality of blades spaced apart from each other in a circumferential direction about the axis between the base plate and the shroud, each of the plurality of blades having a cross-sectional shape extending so as to curve from an inner peripheral side toward an outer peripheral side in a cross section perpendicular to the axis, and a pitch of edges of adjacent blades on the outer peripheral side in the circumferential direction being different on both sides of each of the blades in the circumferential direction. According to the method for manufacturing an impeller, a mold is used, which has a first mold configured to mold a surface of the base plate facing opposite to the shroud, a second mold configured to mold a surface of the shroud facing opposite to the base plate, a surface of the base plate facing the shroud, and part of a suction surface of each of the plurality of blades facing an inside of the curve, and a plurality of slide molds each provided for a pair of adjacent blades and configured to mold the other part of the suction surface of one of the pair of blades and a pressure surface of the other blade facing an outside of the curve, the plurality of slide molds each having a first molding surface for molding the suction surface of the one blade and a second molding surface for molding the pressure surface of the other blade, each of the slide molds being provided so as to be slidable in a return direction corresponding to a direction toward the axis of the impeller and in a withdrawal direction corresponding to a direction toward the outer peripheral side of the impeller. The method for manufacturing an impeller includes: a mold-clamping step of bringing the first mold and the second mold close to each other and sliding the plurality of slide molds in the return direction, thereby closing the mold to form a cavity and clamping the mold; a molding step of filling the cavity with molten resin and cooling and solidifying the resin, thereby molding the impeller in which the base plate, the shroud, and the plurality of blades are integrated; and a mold-opening step of sliding each of the plurality of slide molds in the withdrawal direction and separating the first mold and the second mold from each other, thereby opening the mold. In a pair of adjacent slide molds, the presence or absence of a slide surface extending parallel to a sliding direction of the respective slide mold, or an area of the slide surface, differs between the adjacent slide molds at outer surface portions of the respective first molding surfaces, each of the outer surface portions being configured to mold a portion of the blade closer to an outer peripheral edge, or at inner surface portions of the respective second molding surfaces, each of the inner surface portions being configured to mold a portion of the blade closer to an inner peripheral edge.

According to the first aspect, in a pair of adjacent slide molds, the presence or absence of a slide surface extending parallel to the sliding direction of the respective slide mold, or an area of the slide surface, differs between the adjacent slide molds at outer surface portions of the respective first molding surfaces or at inner surface portions of the respective second molding surfaces. The outer surface portion of the first molding surface or the inner surface portion of the second molding surface of each slide mold forms a portion of adjacent blades at which the suction surface of one blade formed by the first molding surface and the pressure surface of the other blade formed by the second molding surface are closest to each other. Thus, the withdrawal direction of the slide mold is restricted by the shape of the outer surface portion of the first molding surface and the shape of the inner surface portion of the second molding surface. When the presence or absence of the slide surface, or the areas of the slide surfaces, differ at the outer surface portions of the respective first molding surfaces or at the inner surface portions of the respective second molding surfaces in the pair of adjacent slide molds, the angles formed by the withdrawal directions of the adjacent slide molds with respect to the direction corresponding to the radial direction of the impeller can be made different from each other. This makes it possible to adjust the withdrawal directions of the plurality of slide molds such that the slide molds do not interfere with each other and with other portions of the mold. Thus, the impeller for the centrifugal fan, in which the plurality of blades are arranged at unequal pitches, can be integrally molded from resin.

A second aspect of the present disclosure is an embodiment of the method for manufacturing the impeller according to the first aspect. In the second aspect, the slide surface is provided at the outer surface portion of the first molding surface.

According to the second aspect, the slide surface is provided at the outer surface portion of the first molding surface. That is, the restriction on the shape of the blade in the withdrawal direction of the slide mold is imposed on the suction surface. The pressure surface of the blade can thus be maintained as close as possible to a shape that takes into account the air-delivery performance of the impeller. The shape of the suction surface of the blade does not affect the air-delivery performance of the impeller as greatly as the shape of the pressure surface. Thus, degradation of air-delivery performance can be suppressed even when the impeller for the centrifugal fan, in which the plurality of blades are arranged at unequal pitches, is integrally molded.

A third aspect of the present disclosure is an embodiment of the method for manufacturing the impeller according to the first or second aspect. In the third aspect, each of outer peripheral parting lines of the first molding surface and the second molding surface, each of the outer peripheral parting lines forming the outer peripheral edge of the blade, is inclined with respect to a mold-opening direction of the first mold and the second mold so as to extend in a direction corresponding to a radially outward direction of the impeller from the base plate toward the shroud.

According to the third aspect, the outer peripheral parting line of each of the first molding surface and the second molding surface is inclined with respect to the axis such that a portion closer to the shroud protrudes further outward in the radial direction of the impeller than a portion closer to the base plate. Accordingly, the impeller having the blades, each having a skew angle at the outer peripheral edge, can be integrally molded. In the mold for molding the impeller having such a skew angle, restriction on the withdrawal direction of the slide mold is strict, because the pressure surface and the suction surface formed by the slide mold are long in the sliding direction, and the removal distance of the slide mold from the impeller in opening the mold is long. Thus, the technique of the present disclosure is particularly effective in the method of manufacturing such an impeller.

A fourth aspect of the present disclosure is an embodiment of the method for manufacturing the impeller according to any one of the first to third aspects. In the fourth aspect, the cavity includes a plurality of blade cavities for molding the respective blades. The plurality of blade cavities include a first blade cavity for molding a first blade of the plurality of blades, a second blade cavity for molding a second blade adjacent to the first blade, and a third blade cavity for molding a third blade adjacent to the first blade on a side opposite to the second blade. The plurality of slide molds include a first slide mold located between the first blade cavity and the second blade cavity, and a second slide mold located between the first blade cavity and the third blade cavity. A pitch in a direction corresponding to the circumferential direction between the first blade cavity and the third blade cavity is shorter than a pitch in the direction corresponding to the circumferential direction between the first blade cavity and the second blade cavity. The first slide mold and the second slide mold have the slide surfaces at portions corresponding to each other at the outer surface portions of the first molding surfaces or at the inner surface portions of the second molding surfaces. An area of the slide surface of the second slide mold is larger than an area of the slide surface of the first slide mold.

According to the fourth aspect, the pitch between the first blade cavity and the third blade cavity is shorter than the pitch between the first blade cavity and the second blade cavity, and the area of the slide surface of the second slide mold is larger than the area of the slide surface of the first slide mold. The shorter the pitch of adjacent blade cavities, the stricter the restriction on the withdrawal direction of the slide mold located between adjacent blade cavities. To address this, the area of the slide surface of the slide mold located between adjacent blade cavities is increased as the pitch between the adjacent blade cavities decreases, thereby relaxing the restriction on the withdrawal direction of the slide mold. Thus, the withdrawal direction of the first slide mold and the withdrawal direction of the second slide mold can be adjusted such that these slide molds do not interfere with each other.

A fifth aspect of the present disclosure is an embodiment of the method for manufacturing the impeller according to any one of the first to fourth aspects. In the fifth aspect, the plurality of slide molds are identical with each other in shape in 90% or more of the respective second molding surfaces.

According to the fifth aspect, the plurality of slide molds are identical in shape in 90% or more of the respective second molding surfaces. Thus, the plurality of blades are identical in shape in 90% or more of the respective pressure surfaces. According to this configuration, the plurality of blades are different in shape in less than 10% of the respective pressure surfaces; thus, degradation of air-delivery performance can be suppressed even when the impeller for the centrifugal fan, in which the plurality of blades are arranged at unequal pitches, is integrally molded.

### BRIEF DESCRIPTION OF THE DRAWINGS

[FIG. 1] FIG. 1 is a perspective view illustrating, as an example, the configuration of an impeller.
[FIG. 2] FIG. 2 is a plan view illustrating, as an example, the configuration of the impeller.
[FIG. 3] FIG. 3 is a plan view illustrating, as an example, the configuration of the impeller, shown through a shroud.
[FIG. 4] FIG. 4 is a side view illustrating, as an example, the configuration of the impeller.
[FIG. 5] FIG. 5 is a cross-sectional view illustrating, as an example, the configuration of the impeller taken along line V-V in FIG. 4.
[FIG. 6] FIG. 6 is a cross-sectional view of a molding apparatus including a mold used to mold the impeller.
[FIG. 7] FIG. 7 is a plan view illustrating, as an example, a main part of a closed mold, shown through a stationary mold. In FIG. 7, for convenience, the edge of a cavity for base plate molding is indicated by a two-dot-dash line.
[FIG. 8] FIG. 8 is an enlarged plan view of a main part of the mold. In FIG. 8, for convenience, the edge of the cavity portion for base plate molding is indicated by a two-dot-dash line.
[FIG. 9] FIG. 9 is a cross-sectional view illustrating a state in which the mold is closed in the course of manufacturing the impeller and a state in which a cavity in the mold is filled with resin.
[FIG. 10] FIG. 10 is a plan view corresponding to FIG. 8, which illustrates a state in which the impeller is molded in the mold. In FIG. 10, for convenience, the edge of the base plate is indicated by a two-dot-dash line.

### DESCRIPTION OF EMBODIMENTS

Embodiments of the present disclosure will be described in detail below with reference to the drawings. In the following embodiments, a method of manufacturing an impeller according to the present disclosure will be described, taking a case of manufacturing an impeller having six blades as an example. The drawings are used for conceptual description of the technique of the present disclosure. In the drawings, dimensions, ratios, or numbers may be exaggerated or simplified for easy understanding of the present disclosure.

In the following embodiment, a direction along the axis of the impeller will be referred to as an "axial direction," and a direction perpendicular to the axial direction as a "radial direction." Further, a direction along the circumference of the impeller about its axis will be referred to as a "circumferential direction." The expressions of "first," "second," . . . are used to distinguish the terms to which these expressions are given, and do not limit the number and order of the terms.

### <<Embodiments>>

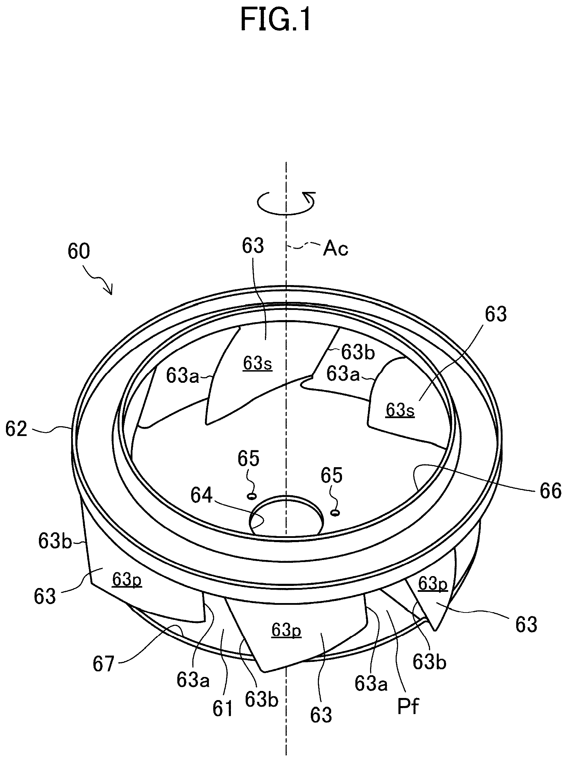

A method of manufacturing an impeller (60) according to this embodiment is used to integrally mold the impeller (60) illustrated in FIG. 1, which is used for a centrifugal fan. The impeller (60) of this example is for a turbo fan.

### -Configuration of Impeller-

The impeller (60) has a base plate (61), a shroud (62), and a plurality of blades (63). The impeller (60) is an integrally molded resin product. That is, the base plate (61), the shroud (62), and the plurality of blades (63) are integrally molded from resin. Although not illustrated, a drive shaft of a fan motor is coupled to the base plate (61) of the impeller (60) via a coupling component. The impeller (60) is rotated by driving the fan motor.

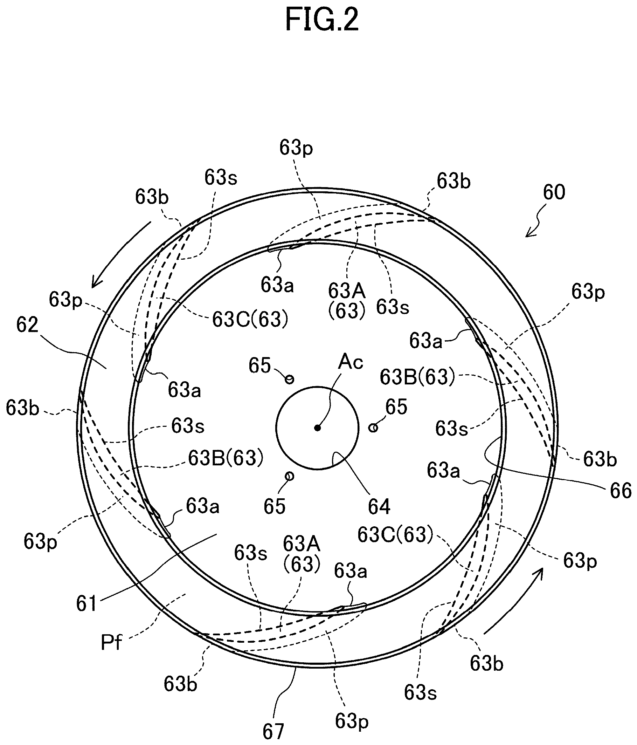

The base plate (61) is formed in a disc shape. The base plate (61) is a hub of the impeller (60), and is disposed substantially coaxially with the drive shaft of the fan motor. The shaft hole (64) is formed in a center portion of the base plate (61). The drive shaft is inserted into the shaft hole (64) via the coupling component. A plurality of fastening holes (65) (three fastening holes (65) in the example illustrated in FIG. 2 and other figures) are formed around the shaft hole (64) of the base plate (61). The plurality of fastening holes (65) are holes through which bolts for fixing the coupling component are inserted, and are provided at equal intervals in the circumferential direction of the shaft hole (64).

The shroud (62) is formed in a circular ring shape. The shroud (62) is spaced apart from the base plate (61) in the axial direction along the axis (Ac) and faces the base plate (61). Further, the shroud (62) is substantially coaxial with the base plate (61). The outer diameter of the shroud (62) of this example is larger than the outer diameter of the base plate (61). The outer diameter of the shroud (62) may be equal to the outer diameter of the base plate (61), or may be smaller than the outer diameter of the base plate (61). The shroud (62) has the fan inlet opening (66). The fan inlet opening (66) is an opening through which air is sucked into the impeller (60). An inner peripheral edge portion of the shroud (62) protrudes away from the base plate (61) to form the fan inlet opening (66).

The plurality of blades (63) are provided between the base plate (61) and the shroud (62). The plurality of blades (63) are disposed at intervals in the circumferential direction about the axis (Ac), that is, in the direction of rotation of the impeller (60). The impeller (60) of this example has six blades (63). Each of the plurality of blades (63) is located in a region closer to the outer peripheral edge of the base plate (61). Each blade (63) is provided to stand in a direction in which the base plate (61) and the shroud (62) face each other. Each blade (63) has a cross-sectional shape extending so as to curve from the inner peripheral side toward the outer peripheral side in a cross section perpendicular to the axis (Ac).

Each of the plurality of blades (63) has an inner edge (63a) and an outer edge (63b). The inner edge (63a) is an edge located on the inner peripheral side (axis (Ac) side) of the blade (63). The inner edge (63a) is located on the front side in the direction of rotation of the impeller (60), and corresponds to the inner periphery of the fan inlet opening (66) in a plan view of the impeller (60). The outer edge (63b) is an edge located on the outer peripheral side (outer side in the radial direction of the impeller (60)) of the blade (63). The outer edge (63b) is located on the rear side in the direction of rotation of the impeller (60), and corresponds to the outer peripheral edge of the shroud (62) in a plan view of the impeller (60). The inner edge (63a) and the outer edge (63b) extend in a direction inclined with respect to the axis (Ac).

The inner edge (63a) is inclined so as to extend outward in the radial direction of the impeller (60) and rearward in the direction of rotation of the impeller (60), from the base plate (61) toward the shroud (62). The inner edge (63a) is curved so as to protrude forward in the direction of rotation, and is curved more greatly on the shroud (62) side than on the base plate (61) side. The outer edge (63b) is inclined so as to extend outward in the radial direction of the impeller (60) and rearward in the direction of rotation of the impeller (60), from the base plate (61) toward the shroud (62). The outer edge (63b) is formed substantially linearly.

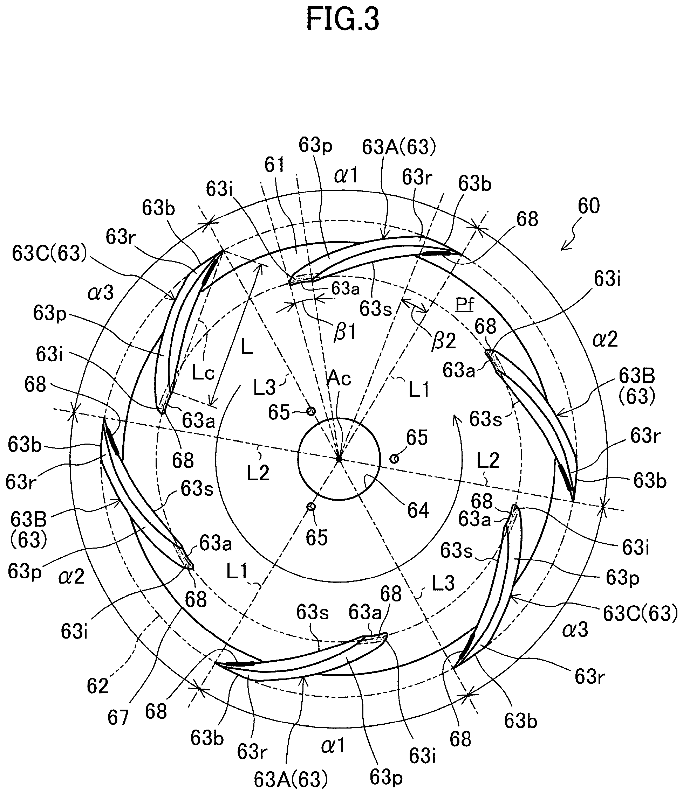

One end of each blade (63) in the axial direction is connected to a surface of the base plate (61) facing the shroud (62). The other end of each blade (63) in the axial direction is connected to a surface of the shroud (62) facing the base plate (61). In a cross section perpendicular to the axis (Ac) of the impeller (60), a line segment connecting the inner edge (63a) and outer edge (63b) of the blade (63) is a chord line (Lc). An example of the chord line (Lc) is illustrated in FIG. 3. The length of the chord line (Lc) is a chord length (L). The chord length (L) is substantially constant over the entire blade (63) in the axial direction.

The inner edge (63a) and the outer edge (63b) have skew angles β1 and β2, respectively. The skew angle β1 of the inner edge (63a) is an angle formed by a line connecting an end of the inner edge (63a) on the base plate (61) side and the axis (Ac) and a line connecting an end of the inner edge (63a) on the shroud (62) side and the axis (Ac) in a plan view of the impeller (60). The skew angle β1 of the inner edge (63a) is, for example, 5° to 15°. The skew angle β2 of the outer edge (63b) is an angle formed by a line connecting an end of the outer edge (63b) on the base plate (61) side and the axis (Ac) and a line connecting an end of the outer edge (63b) on the shroud (62) side and the axis (Ac) in a plan view of the impeller (60). The skew angle β2 of the outer edge (63b) is, for example, 5° to 15°.

In a cross section perpendicular to the axis (Ac), the thickness of each blade (63) gradually increases from the inner edge (63a) toward the outer edge (63b) and then decreases. The thickness of each blade (63) is a thickness in a direction orthogonal to the chord line (Lc) of the blade (63). Each blade (63) has a teardrop shape with a maximum thickness at a position closer to the inner edge (63a). A portion of each blade (63) closer to the inner edge (63a) has a relatively large curvature compared with other portions. The portion with the relatively large curvature strictly restricts a withdrawal direction (d2) of a slide mold (40); therefore, the area of such a portion may be small or may be eliminated by providing a flat surface (68) (described later).

Each blade (63) further has a pressure surface (63p) and a suction surface (63s). The pressure surface (63p) is a surface that receives a positive pressure during rotation of the impeller (60). The pressure surface (63p) faces the outside of the curve of the blade (63) between the inner edge (63a) and the outer edge (63b), and faces forward in the direction of rotation of the impeller (60) and toward the outer peripheral side of the impeller (60). The suction surface (63s) is a surface that receives a negative pressure during rotation of the impeller (60). The suction surface (63s) faces the inside of the curve of the blade (63) between the inner edge (63a) and the outer edge (63b), and faces rearward in the direction of rotation of the impeller (60) and toward the axis (Ac) of the impeller (60).

A fan outlet opening (67) is formed between the outer peripheral edge of the base plate (61) and the outer peripheral edge of the shroud (62). The fan outlet opening (67) is an opening through which air is discharged from the impeller (60) to the outside. In the impeller (60), a portion of the space between the base plate (61) and the shroud (62) in which the blades (63) are disposed forms a fan flow path (Pf). The fan flow path (Pf) is an annular flow path continuous with the fan outlet opening (67), and is partitioned by the plurality of blades (63). The fan flow path (Pf) between adjacent blades (63) expands from the side closer to the axis (Ac) of the impeller (60) toward the outer peripheral side.

In the impeller (60), the plurality of blades (63) are disposed at unequal pitches in order to reduce NZ noise. The pitch of adjacent blades (63) refers to the pitch of the outer edges (63b) of the blades (63) in the circumferential direction. The pitch of adjacent blades (63) differs on both sides of each blade (63) in the circumferential direction. The six blades (63) in this embodiment are disposed at three different pitches. The six blades (63) include two first blades (63A), two second blades (63B), and two third blades (63C).

The first blade (63A) and the second blade (63B) are adjacent to each other in the circumferential direction. The second blade (63B) is positioned rearward of the first blade (63A) in the direction of rotation. The first blade (63A) is also adjacent to the third blade (63C) in the circumferential direction. The third blade (63C) is adjacent to the first blade (63A) on the opposite side of the second blade (63B) and is positioned forward of the first blade (63A) in the direction of rotation. The third blade (63C) is also adjacent to the second blade (63B) and is positioned rearward of the second blade (63B) in the direction of rotation.

As illustrated in FIG. 3, the two first blades (63A) are disposed 180 degrees apart from each other in the circumferential direction and are provided in point symmetry at positions corresponding to each other in the radial direction across the axis (Ac). The same applies to the two second blades (63B) and the two third blades (63C). The pitch between the first blade (63A) and the third blade (63C) is shorter than the pitch between the first blade (63A) and the second blade (63B). The pitch between the second blade (63B) and the third blade (63C) is shorter than the pitch between the first blade (63A) and the third blade (63C).

In a plan view of the fan inlet opening (66) of the impeller (60) as viewed from the front, a straight line connecting the outer edge (63b) of the first blade (63A) and the axis (Ac) is defined as a first straight line (L1); a straight line connecting the outer edge (63b) of the second blade (63B) and the axis (Ac) is defined as a second straight line (L2); and a straight line connecting the outer edge (63b) of the third blade (63C) and the axis (Ac) is defined as a third straight line (L3). The first blade (63A), the second blade (63B), and the third blade (63C) are disposed at pitches at which the first straight line (L1) and the third straight line (L3), the first straight line (L1) and the second straight line (L2), and the second straight line (L2) and the third straight line (L3) form different angles from each other.

For example, the first blade (63A) and the third blade (63C) are disposed at a pitch at which an angle α1 between the first straight line (L1) and the third straight line (L3) is 60°. The first blade (63A) and the second blade (63B) are disposed at a pitch at which an angle α2 between the first straight line (L1) and the second straight line (L2) is 69°. The second blade (63B) and the third blade (63C) are disposed at a pitch at which an angle α3 between the second straight line (L2) and the third straight line (L3) is 51°. As described above, the interval between the first blade (63A) and the third blade (63C) is narrower than the interval between the first blade (63A) and the second blade (63B), and is wider than the interval between the second blade (63B) and the third blade (63C).

The impeller (60) having a plurality of blades (63) disposed at unequal pitches as described above has a portion where the interval between adjacent blades (63) in the circumferential direction is narrower than that in the impeller (60) having the same number of blades (63) disposed at equal pitches. At the portion where the interval between adjacent blades (63) in the circumferential direction is narrow, the sliding direction of the slide mold (40) located between cavities (C) for forming the blades (63) is strictly restricted, and it is more likely that slide molds (40) interfere with each other. Accordingly, disposing the plurality of blades (63) at unequal pitches results in local reduction in the pitch of the blades (63) and therefore tends to cause interference between adjacent slide molds (40).

To address this, in the impeller (60) of this embodiment, adjacent blades (63) are configured to have partially different shapes. The first blade (63A), the second blade (63B), and the third blade (63C) have different shapes at portions corresponding to each other. Here, the "portions corresponding to each other" refer to portions having corresponding coordinate values on each axis in a three-dimensional coordinate system defined for each blade (63) by three axes, that is, an axis along the chord line (Lc) of the blade (63), an axis orthogonal to the chord line (Lc), and an axis extending in the axial direction. In this embodiment, the expression that the "blades (63) have different shapes" includes a case in which the surface shapes of the blades (63) differ only slightly to an extent that cannot be recognized by visual observation alone.

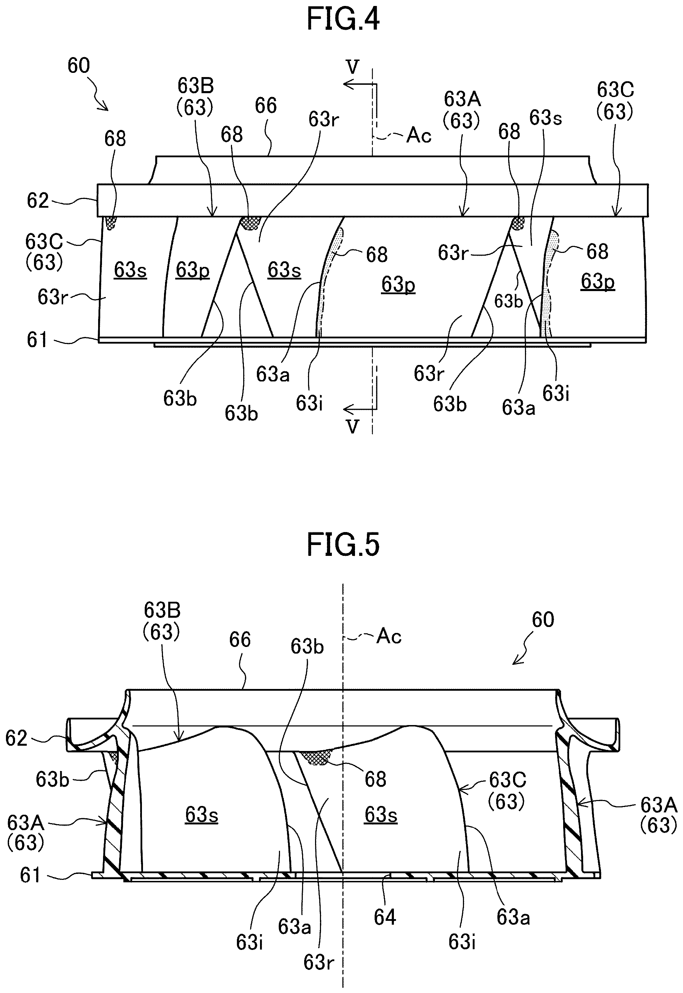

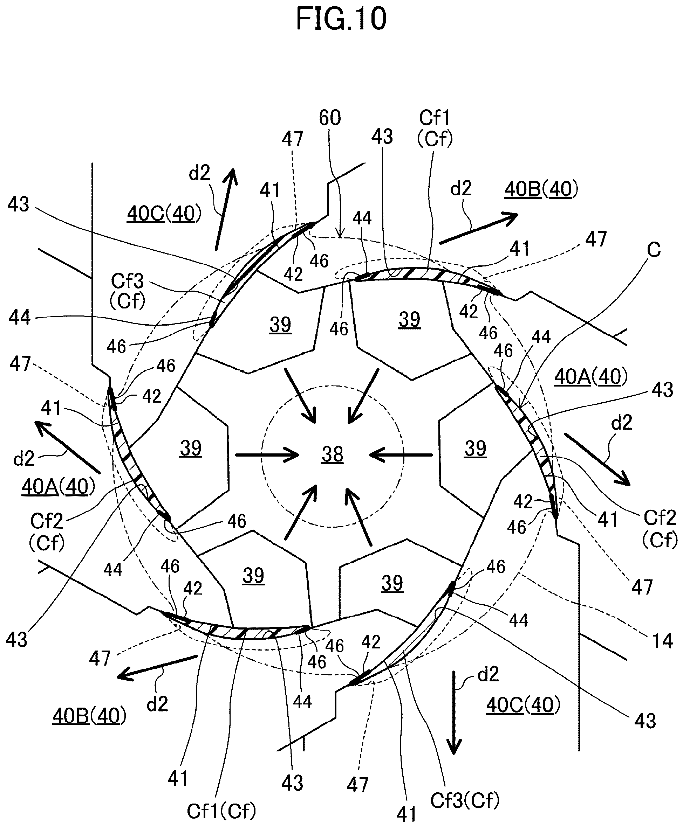

The portions at which the first blade (63A), the second blade (63B), and the third blade (63C) have different shapes are a portion of the blade (63) closer to the inner edge (63a), the pressure surface (63p) of an inner end portion (63i) (portion indicated by dot hatching in FIGS. 3 to 5) which is a portion including the inner edge (63a) in this example, and the suction surface (63s) of an outer portion (63r) (portion indicated by a thick line in FIG. 10, portion indicated by mesh hatching in FIGS. 4 and 5) which is a portion closer to the outer edge (63b). Here, the inner end portion (63i) refers to a portion extending from the inner edge (63a) to a position located at 10% of the chord length L of the blade (63). The outer portion (63r) refers to a portion extending from the outer edge (63b) to a position located at 30% of the chord length L of the blade (63).

The pressure surface (63p) of the inner end portion (63i) and the suction surface (63s) of the outer portion (63r) of each blade (63) are closest to adjacent blades (63) on both sides in the direction of rotation of the impeller (60). Thus, the shapes of the pressure surface (63p) of the inner end portion (63i) and the suction surface (63s) of the outer portion (63r) of each blade (63) are dominant factors that restrict the withdrawal direction (d2) of a slide mold (40), used to mold the pressure surface (63p) of one blade (63) and the suction surface (63s) of the other blade (63) of a pair of adjacent blades (63), in a mold (5) for molding the impeller (60). In this embodiment, in order to adjust the withdrawal direction (d2) of the slide mold (40), the shapes of the pressure surface (63p) of the inner end portion (63i) and the suction surface (63s) of the outer portion (63r) of each blade (63) are devised.

Strictly speaking, the portion at which the shape of the pressure surface (63p) of the inner end portion (63i) differs among the first blade (63A), the second blade (63B), and the third blade (63C) in this embodiment is a portion of the pressure surface (63p) of the inner end portion (63i) of each blade (63) excluding an end portion closer to the shroud (62) (see FIG. 4). Strictly speaking, the portion at which the shape of the suction surface (63s) of the outer portion (63r) differs among the first blade (63A), the second blade (63B), and the third blade (63C) is a portion of the suction surface (63s) at an end portion of the outer portion (63r) of each blade (63) closer to the shroud (62) (see FIG. 5).

The area of the flat surface (68) differs at portions where the shapes of the pair of adjacent blades (63) differ. The flat surface (68) is a flat surface extending in a direction intersecting a straight line connecting the outer edge (63b) of one blade (63) positioned forward in the direction of rotation and the inner edge (63a) of the other blade (63) positioned rearward in the direction of rotation in a plan view of the impeller (60). The direction in which the flat surface (68) extends in the plan view of the impeller (60) corresponds to the withdrawal direction (d2) of the slide mold (40). The area of the flat surface (68) varies depending on the angle formed with respect to the radial direction of the impeller (60).

Each of the first blade (63A), the second blade (63B), and the third blade (63C) of this embodiment has the flat surface (68) on the pressure surface (63p) of the inner end portion (63i) and on the suction surface (63s) of the outer portion (63r), and the areas of the flat surfaces (68) of these blades differ between portions corresponding to each other. The smaller the pitch between each blade (63) and the adjacent blade (63) positioned forward in the direction of rotation of the impeller (60), the larger the areas of the flat surfaces (68) of the inner end portion (63i) and the outer portion (63r) of the blade (63).

Specifically, the area of the flat surface (68) of the inner end portion (63i) of the first blade (63A) is larger than the area of the flat surface (68) of the inner end portion (63i) of the second blade (63B), and the area of the flat surface (68) of the outer portion (63r) of the first blade (63A) is larger than the area of the flat surface (68) of the outer portion (63r) of the second blade (63B). The area of the flat surface (68) of the inner end portion (63i) of the third blade (63C) is larger than the area of the flat surface (68) of the inner end portion (63i) of the first blade (63A), and the area of the flat surface (68) of the outer portion (63r) of the third blade (63C) is larger than the area of the flat surface (68) of the outer portion (63r) of the first blade (63A).

Adjacent blades (63) have different thicknesses at portions where their shapes differ. That is, the thickness of the inner end portion (63i) of the first blade (63A), the thickness of the inner end portion (63i) of the second blade (63B), and the thickness of the inner end portion (63i) of the third blade (63C) differ at portions corresponding to each other according to the area of the flat surface (68). The thickness of the outer portion (63r) of the first blade (63A), the thickness of the outer portion (63r) of the second blade (63B), and the thickness of the outer portion (63r) of the third blade (63C) differ at portions corresponding to each other according to the area of the flat surface (68).

The thickness of the inner end portion (63i) of each of the first blade (63A), the second blade (63B), and the third blade (63C) is the thickness of the inner end portion (63i) in a direction orthogonal to the chord line (Lc) of the blade (63). The thickness of the outer portion (63r) of each of the first blade (63A), the second blade (63B), and the third blade (63C) is the thickness of the outer portion (63r) in the direction orthogonal to the chord line (Lc) of the blade (63). The smaller the pitch between each blade (63) and the adjacent blade (63) positioned forward in the direction of rotation of the impeller (60), the thinner the thickness of the inner end portion (63i) and the thickness of the outer portion (63r) of the blade (63) at portions where the blades (63) have different shapes.

Specifically, at the portions of the first blade (63A) and the second blade (63B) corresponding to each other, the thickness of the inner end portion (63i) of the first blade (63A) is thinner than the thickness of the inner end portion (63i) of the second blade (63B), and the thickness of the outer portion (63r) of the first blade (63A) is thinner than the thickness of the outer portion (63r) of the second blade (63B). At the portions of the first blade (63A) and the third blade (63C) corresponding to each other, the thickness of the inner end portion (63i) of the third blade (63C) is thinner than the thickness of the inner end portion (63i) of the first blade (63A), and the thickness of the outer portion (63r) of the third blade (63C) is thinner than the thickness of the outer portion (63r) of the first blade (63A).

The difference in thickness at portions where the inner end portions (63i) of the first blade (63A), the second blade (63B), and the third blade (63C) have different shapes is, for example, approximately 0.3 mm to 0.7 mm. The difference in thickness at portions where the suction surfaces (63s) of the outer portions (63r) of the first blade (63A), the second blade (63B), and the third blade (63C) have different shapes is, for example, approximately 0.1 mm to 0.3 mm. The first blade (63A), the second blade (63B), and the third blade (63C) are identical to each other in shape in 90% or more of the respective pressure surfaces (63p).

More specifically, the area of the identically shaped portion is 90% or more of the area of the pressure surface (63p) of each of the first blade (63A), the second blade (63B), and the third blade (63C). In this specification, the expression of "being identical to each other in shape" means that a cross-sectional shape, curvature distribution, and a projected contour are the same or substantially the same. The identically shaped portion of the pressure surface (63p) of each of the plurality of blades (63), i.e., the area of the identically shaped portion of the pressure surface (63p), is preferably 95% or more of the area of the pressure surface (63p).

When the impeller (60) rotates, air is sucked through the fan inlet opening (66) and discharged through the fan outlet opening (67). The air passing through the impeller (60) flows from the inside to the outside of the fan flow path (Pf) in the radial direction. Each blade (63) increases the pressure of air by a change in the air flow speed in the direction of rotation in a region from the inner edge (63a) to the outer edge (63b) and by a difference in the circumferential speed between the inner edge (63a) and the outer edge (63b). Thus, the impeller (60) increases the pressure of the air sucked through the fan inlet opening (66) and then discharges the air through the fan outlet opening (67).

### -Manufacturing of Impeller-

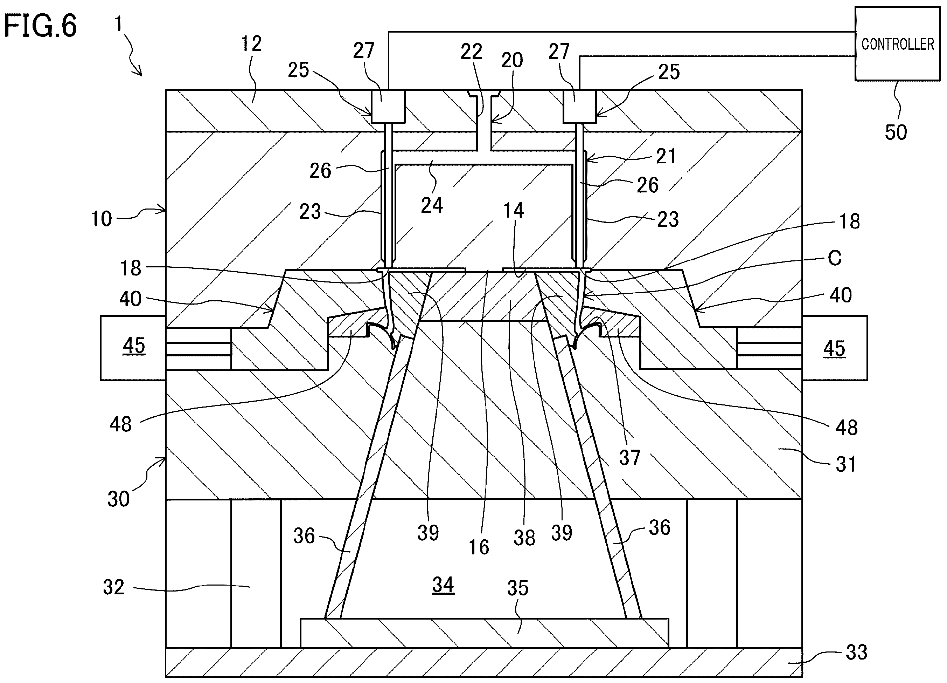

The impeller (60) is formed by injection molding. An injection molding apparatus (1) illustrated in FIG. 6 is used for molding the impeller (60).

### <Injection Molding Apparatus>

The injection molding apparatus (1) includes a mold (5), an injection machine and an opening-closing mechanism (both not illustrated), and a controller (50). The opening-closing mechanism is a mechanism configured to open, close, and clamp the mold (5). The injection molding apparatus is configured to form therein a cavity (C) for molding the impeller (60) by closing the mold (5) and to inject molten resin fed from the injection machine into the cavity (C).

### <Mold>

The mold (5) includes a stationary mold (10), a movable mold (30), and the plurality of slide molds (40). The stationary mold (10) is an example of a first mold. The movable mold (30) is an example of a second mold.

The stationary mold (10) is attached to a stationary plate (12). A surface of the stationary mold (10) facing the movable mold (30) has a third molding surface (14). The third molding surface (14) is a surface that forms a surface of the base plate (61) facing opposite to the shroud (62), i.e., an outer surface facing the outside of the impeller (60). A columnar portion (16) for forming the shaft hole (64) and a protrusion (not illustrated) for forming the fastening hole (65) are provided at a center portion of the third molding surface (14). A plurality of gates (18) are formed in the stationary mold (10). Each gate (18) is an opening for injecting the molten resin (R), which is the raw material of the impeller (60), into the cavity (C), and is open to the third molding surface (14). Each gate (18) of this example is a direct gate.

The stationary mold (10) is provided with a resin flow path (20). The resin flow path (20) is configured to include a hot runner (21) and a sprue (22). The hot runner (21) has a plurality of branch passages (23) and a common passage (24). The branch passage (23) is provided for each gate (18). Each branch passage (23) extends from the gate (18) in a mold-opening direction and communicates with the gate (18). The common passage (24) extends in a direction orthogonal to the branch passages (23), coupling end portions of the branch passages (23) opposite from the gates (18), and communicates with the plurality of branch passages (23). The sprue (22) extends from the common passage (24) of the hot runner (21) in the mold-opening direction and penetrates the stationary plate (12) to communicate with a nozzle of the injection machine.

The stationary mold (10) is further provided with a plurality of needle valves (25). The needle valve (25) is provided for each gate (18). Each needle valve (25) is configured to include a needle (26) and a first actuator (27). The needle (26) is housed in the branch passage (23). The first actuator (27) is an apparatus that moves the needle (26) back and forth relative to the gate (18), and is provided in the stationary plate (12). A portion of the needle (26) opposite from the gate (18) is connected to the first actuator (27). Each gate (18) opens and closes in accordance with forward and backward movements of the needle (26). In addition, although not illustrated, the stationary mold (10) is provided with a cooling flow path through which coolant such as water flows.

The movable mold (30) is configured to include a base block (31), a center mold (38), and a plurality of inner cores (39). The base block (31) is attached to a movable plate (33) via a spacer block (32). The spacer block (32) has a housing chamber (34) therein. An ejector plate (35) is housed in the housing chamber (34). The ejector plate (35) supports a plurality of arms (36) penetrating the base block (31) in an inclined orientation with respect to the mold-opening direction. The plurality of arms (36) extend so as to approach a position closer to the axis (Ac), that is, to approach the columnar portion (16), from a position corresponding to the outer peripheral side of the impeller (60), from the ejector plate (35) toward the stationary mold (10).

The base block (31) has a fourth molding surface (37). The fourth molding surface (37) forms a surface of the shroud (62) facing opposite to the base plate (61), i.e., a surface facing the outside of the impeller (60). Although not illustrated, a cooling flow path through which coolant such as water flows is also formed in the base block (31). The center mold (38) is disposed at a portion of the base block (31) corresponding to the inside of the impeller (60). The plurality of inner cores (39) are located at the periphery of the center mold (38) and are disposed so as to surround the center mold (38). The center mold (38) and each inner core (39) are elements for forming a portion located closer to the center than the blades (63) on a surface of the base plate (61) facing the shroud (62). Each inner core (39) is also an element for forming part of the suction surface (63s) of each blade (63), specifically, a portion closer to the inner edge (63a).

Each inner core (39) is coupled to the arm (36). The ejector plate (35) changes the degree of inclination of the arm (36) in conjunction with the opening and closing operation of the mold (5). As the mold (5) is closed, the ejector plate (35) reduces the degree of inclination of each arm (36) with respect to the mold-opening direction, and the plurality of inner cores (39) are displaced radially outward so as to spread in directions corresponding to the outer peripheral side of the impeller (60). On the other hand, as the mold (5) is opened, the ejector plate (35) increases the degree of inclination of each arm (36) with respect to the mold-opening direction, and the plurality of inner cores (39) are displaced so as to approach each other and converge toward the position corresponding to the axis (Ac) of the impeller (60) (the displacement direction is indicated by arrows in FIG. 10).

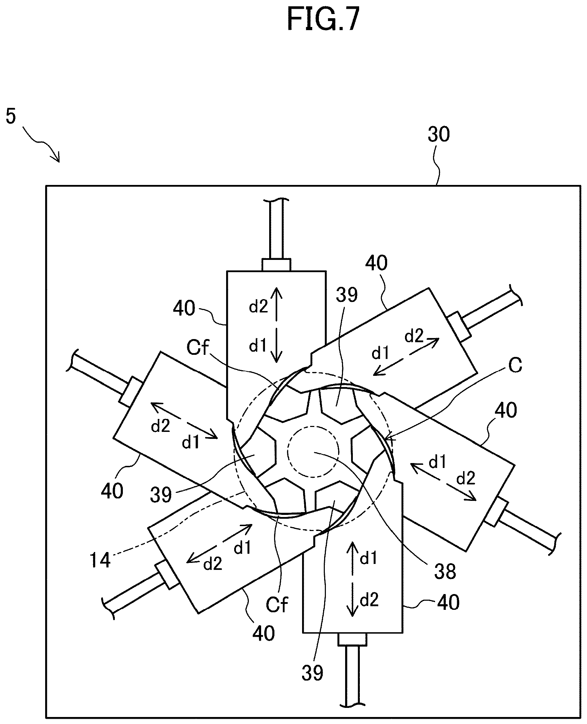

The plurality of slide molds (40) are disposed between the stationary mold (10) and the movable mold (30) and are spaced apart from each other so as to surround the third molding surface (14) and the fourth molding surface (37). As illustrated in FIG. 7, the slide mold (40) is provided for each pair of adjacent blades (63). That is, there are six slide molds (40) in this example. Each slide mold (40) has a first molding surface (41) and a second molding surface (43). The first molding surface (41) is a surface for forming the other part of the suction surface (63s) of one of the adjacent blades (63), specifically, a portion closer to the outer edge (63b). The second molding surface (43) is a surface for forming the pressure surface (63p) of the other blade (63) of the adjacent blades (63).

Each slide mold (40) is provided so as to be slidable in a return direction (d1) corresponding to a direction toward the axis (Ac) of the impeller (60) and in the withdrawal direction (d2) corresponding to a direction toward the outer peripheral side of the impeller (60). A second actuator (45) is connected to each slide mold (40). The plurality of slide molds (40) are driven by the second actuators (45) to slide in the return direction (d1) or the withdrawal direction (d2). Each of the slide molds (40) slides in the return direction (d1) between the stationary mold (10) and the movable mold (30), thereby closing the mold (5) and forming the cavity (C).

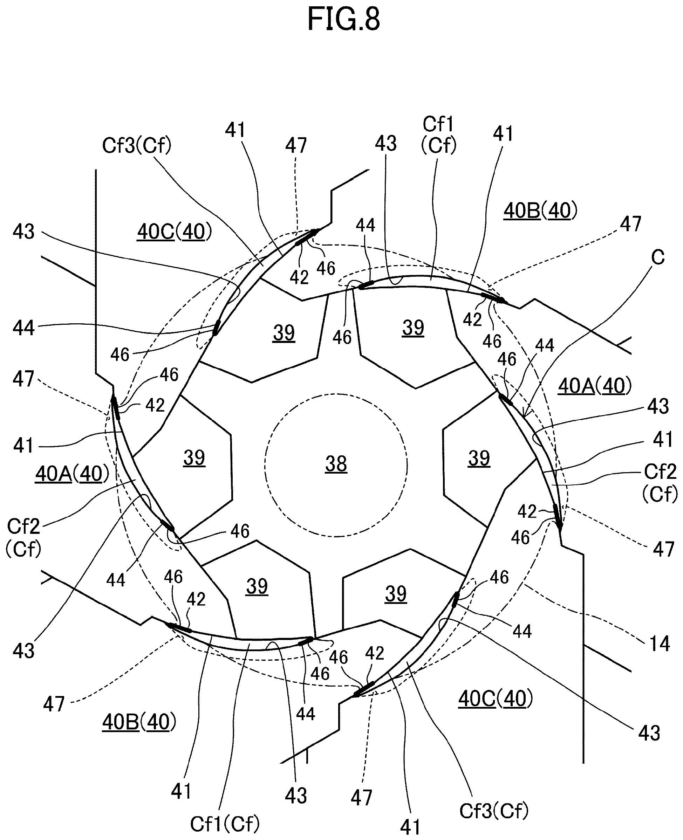

As illustrated in FIG. 8, the cavity (C) includes a plurality of blade cavities (Cf) for molding the respective blades (63). The plurality of blade cavities (Cf) include two first blade cavities (Cf1), two second blade cavities (Cf2), and two third blade cavities (Cf3). The first blade cavities (Cf1) are portions, in the cavity (C), for molding the first blades (63A). The second blade cavities (Cf2) are portions, in the cavity (C), for molding the second blades (63B). The third blade cavities (Cf3) are portions, in the cavity (C), for molding the third blades (63C).

The pitch in a direction corresponding to the circumferential direction of the impeller (60) between the first blade cavity (Cf1) and the third blade cavity (Cf3) is shorter than the pitch in the direction corresponding to the circumferential direction of the impeller (60) between the first blade cavity (Cf1) and the second blade cavity (Cf2). The pitch in the direction corresponding to the circumferential direction of the impeller (60) between the second blade cavity (Cf2) and the third blade cavity (Cf3) is shorter than the pitch in the direction corresponding to the circumferential direction of the impeller (60) between the first blade cavity (Cf1) and the second blade cavity (Cf2).

The plurality of slide molds (40) include two first slide molds (40A), two second slide molds (40B), and two third slide molds (40C). Each of the first slide molds (40A) is a slide mold (40) located between the first blade cavity (Cf1) and the second blade cavity (Cf2). Each of the second slide molds (40B) is a slide mold (40) located between the first blade cavity (Cf1) and the third blade cavity (Cf3). Each of the third slide molds (40C) is a slide mold (40) located between the second blade cavity (Cf2) and the third blade cavity (Cf3).

In each adjacent pair of slide molds (40), the areas of the slide surfaces (46) differ from each other both at the outer surface portions (42) of the respective first molding surfaces (41), which form portions of the respective blades (63) closer to the outer edge (63b), and at the inner surface portions (44) of the respective second molding surfaces (43), which form portions of the respective blades (63) closer to the inner edge (63a). The slide surface (46) is a surface extending parallel to the sliding direction of the slide mold (40), and forms a surface for forming the flat surface (68) of the blade (63). Each of the first slide mold (40A), the second slide mold (40B), and the third slide mold (40C) of this embodiment has the slide surface (46) (indicated by a thick line in FIG. 8) on the outer surface portion (42) of the first molding surface (41) and on the inner surface portion (44) of the second molding surface (43), and the areas of the slide surfaces (46) of the molds differ among portions corresponding to each other.

The smaller the pitch of the blade cavities (Cf) on both sides of the slide mold (40), the larger the areas of the slide surfaces (46) on the inner surface portion (44) and the outer surface portion (42) of the slide mold (40). Specifically, the area of the slide surface (46) of the inner surface portion (44) of the second slide mold (40B) is larger than the area of the slide surface of the inner surface portion (44) of the first slide mold (40A), and the area of the slide surface (46) of the outer surface portion (42) of the second slide mold (40B) is larger than the area of the slide surface (46) of the outer surface portion (42) of the first slide mold (40A). In addition, the area of the slide surface (46) of the inner surface portion (44) of the third slide mold (40C) is larger than the area of the slide surface (46) of the inner surface portion (44) of the second slide mold (40B), and the area of the slide surface (46) of the outer surface portion (42) of the third slide mold (40C) is larger than the area of the slide surface (46) of the outer surface portion (42) of the second slide mold (40B).

An end portion of each slide mold (40) in the return direction (d1) abuts against the inner core (39). Since the plurality of blades (63) of the impeller (60) to be molded are disposed at unequal pitches, a boundary position between the inner core (39) and the end portion of the slide mold (40) in the direction along the chord line (Lc) of the blade cavity (Cf) differs among the first blade cavity (Cf1), the second blade cavity (Cf2), and the third blade cavity (Cf3). Each slide mold (40) has an outer peripheral parting line (47) for forming the outer edge (63b) of the blade (63) as the edges of the first molding surface (41) and the second molding surface (43).

Each of the outer peripheral parting lines (47) of adjacent slide molds (40), specifically, the first slide mold (40A) and the second slide mold (40B), the second slide mold (40B) and the third slide mold (40C), and the first slide mold (40A) and the third slide mold (40C), is a line that forms the outer edge (63b) of the common blade (63). Each of the outer peripheral parting lines (47) on the first molding surface (41) and the second molding surface (43) of each slide mold (40) is inclined with respect to the mold-opening direction so as to extend further in a direction corresponding to the radially outward direction of the impeller (60) from the cavity portion for molding the base plate (61) toward the cavity portion for molding the shroud (62) to form the skew angle β2 of the corresponding outer edge (63b).

Each slide mold (40) has a movable portion (48) for forming a surface of the shroud (62) facing the base plate (61) on the outer peripheral side of the impeller (60). Each slide mold (40) is configured such that, when the mold (5) is opened, the movable portion (48) is displaceable to avoid interference with a molded product in the cavity (C) and the movable mold (30). The shape of the second molding surface (43) of each slide mold (40) is in a mirror relationship with the shape of the pressure surface (63p) of the corresponding blade (63) of the impeller (60) to be molded.

In this embodiment, the plurality of slide molds (40) are identical to each other in shape in 90% or more of the respective second molding surfaces (43). The identically shaped portion of the second molding surface (43) of each of the plurality of slide molds (40) is preferably 95% or more of the second molding surface (43). More specifically, the area of the identically shaped portion is 90% or more, preferably 95% or more, of the area of the second molding surface (43) of each of the first slide mold (40A), the second slide mold (40B), and the third slide mold (40C).

### <Controller>

The controller (50) is a controller based on a well-known microcomputer. The controller (50) has a processor and a memory. The memory stores various programs and data. The processor reads and executes the program from the memory, and performs control related to the molding of the impeller (60) by the injection molding apparatus (1). The controller (50) is electrically connected to each of the first actuators (27) of the plurality of needle valves (25) and to the injection machine and the opening-closing mechanism. The controller (50) controls the timing of injecting the molten resin (R) from each gate (18), with the mold (5) being closed and the cavity (C) being formed inside the mold (5).

### <Impeller Molding Process>

A method of manufacturing the impeller (60) using the injection molding apparatus (1) includes, as a molding process, a mold-clamping step, a molding step, and a mold-opening step. The mold-clamping step, the molding step, and the mold-opening step are performed in this order.

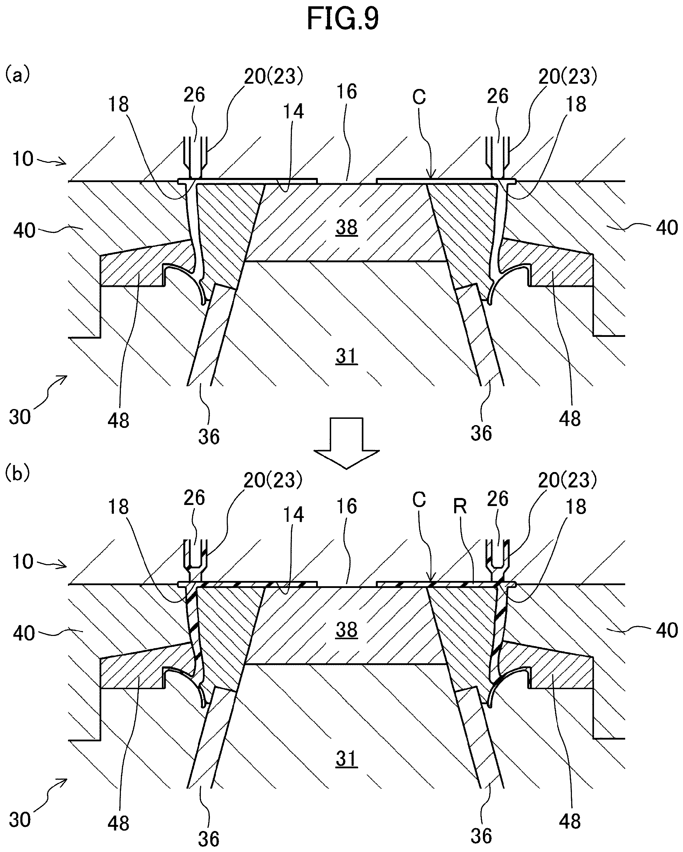

First, in the mold-clamping step, the opening-closing mechanism of the mold (5) is actuated to bring the stationary mold (10) and the movable mold (30) close to each other, and each second actuator (45) is actuated to slide the plurality of slide molds (40) in the return direction (d1). By doing so, as illustrated in FIG. 9(a), the mold (5) is closed with the stationary mold (10), the movable mold (30), and the slide molds (40) in predetermined positional relationships on the closed side, thereby forming the cavity (C) in the mold (5). Further, pressure is applied to the closed mold (5) using a toggle or a cylinder to clamp the mold (5).

In the subsequent molding step, the injection machine is actuated, and the first actuator (27) of each needle valve (25) is also actuated, to retract the needle (26) corresponding to the respective gate (18), thereby opening the gate (18). As illustrated in FIG. 9(b), the molten resin (R) supplied to the resin flow path (20) in the mold (5) by the injection machine is injected into the cavity (C) from each gate (18), thereby filling the cavity (C) with the resin. When the entire cavity (C) has been filled with the resin (R), injection of the resin (R) from the injection machine is ended, and the first actuator (27) of each needle valve (25) is actuated to move the needle (26) corresponding to the respective gate (18) forward, thereby closing each gate (18). The resin (R) filling the cavity (C) is solidified by cooling the mold (5). By cooling and solidifying the resin (R), the impeller (60), in which the base plate (61), the shroud (62), and the plurality of blades (63) are integrally formed, is molded in the cavity (C).

Then, in the mold-opening step, the opening-closing mechanism of the mold (5) is actuated to separate the stationary mold (10) and the movable mold (30) from each other, and each second actuator (45) is actuated to slide the plurality of slide molds (40) in the withdrawal direction (d2) as illustrated in FIG. 10. By doing so, the mold (5) is opened with the stationary mold (10), the movable mold (30), and the slide molds (40) in predetermined positional relationships on the open side. At this time, the inner cores (39) are displaced toward each other toward a position corresponding to the axis (Ac) of the impeller (60) as the arms (36) change their degree of inclination, thereby avoiding interference with the shroud (62) of the impeller (60). When the mold (5) is opened, the impeller (60) can be removed from the mold (5).

After the impeller (60) is removed from the mold (5), post-processing is performed, such as removing burrs from the impeller (60), if any are present. The impeller (60) can be manufactured using the injection molding apparatus (1) in this manner.

### -Features of Embodiment-

According to the method for manufacturing the impeller (60) of this embodiment, in the pair of adjacent slide molds (40) of the mold (5) of the injection molding apparatus (1) used to mold the impeller (60), the areas of the slide surfaces (46) extending parallel to the sliding directions of the respective slide molds (40) at the outer surface portion (42) of the first molding surface (41) or at the inner surface portion (44) of the second molding surface (43) differ between the slide molds (40). The outer surface portion (42) of the first molding surface (41) or the inner surface portion (44) of the second molding surface (43) of each slide mold (40) forms a portion of adjacent blades (63) at which the suction surface (63s) of one blade (63) formed by the first molding surface (41) and the pressure surface (63p) of the other blade (63) formed by the second molding surface (43) are closest to each other. Thus, the withdrawal direction (d2) of the slide mold (40) is restricted by the shape of the outer surface portion (42) of the first molding surface (41) and the shape of the inner surface portion (44) of the second molding surface (43). When the areas of the slide surfaces (46) differ at the outer surface portions (42) of the respective first molding surfaces (41) or at the inner surface portions (44) of the respective second molding surfaces (43) in the pair of adjacent slide molds (40), the angles formed by the withdrawal directions (d2) of the adjacent slide molds (40) with respect to the direction corresponding to the radial direction of the impeller (60) can be made different from each other. This makes it possible to adjust the withdrawal directions (d2) of the plurality of slide molds (40) such that the slide molds (40) do not interfere with each other and with other portions of the mold (5). Thus, the impeller (60) for the centrifugal fan, in which the plurality of blades (63) are arranged at unequal pitches, can be integrally molded from resin.

According to the method for manufacturing the impeller (60) of this embodiment, the slide surface (46) is provided at the outer surface portion (42) of the first molding surface (41) in each slide mold (40). That is, the restriction on the shape of the blade (63) in the withdrawal direction (d2) of the slide mold (40) is imposed on the suction surface (63s). The pressure surface (63p) of the blade (63) can thus be maintained as close as possible to a shape that takes into account the air-delivery performance of the impeller (60). The shape of the suction surface (63s) of the blade (63) does not affect the air-delivery performance of the impeller (60) as greatly as the shape of the pressure surface (63p). Thus, degradation of air-delivery performance can be suppressed even when the impeller (60) for the centrifugal fan, in which the plurality of blades (63) are arranged at unequal pitches, is integrally molded.

According to the method for manufacturing the impeller (60) of this embodiment, in each slide mold (40), the outer peripheral parting line (47) of each of the first molding surface (41) and the second molding surface (43) is inclined with respect to the axis (Ac) such that a portion closer to the shroud (62) protrudes further outward in the radial direction of the impeller (60) than a portion closer to the base plate (61). Accordingly, the impeller (60) having the blades (63), each having a skew angle β2 at the outer edge (63b), can be integrally molded. In the mold (5) for molding the impeller (60) having such skew angles β2, restriction on the withdrawal direction (d2) of the slide mold (40) is strict, because the pressure surface (63p) and the suction surface (63s) formed by the slide mold (40) are long in the sliding direction, and the removal distance of the slide mold (40) from the impeller (60) in opening the mold (5) is long. Thus, the technique of the present disclosure is particularly effective in the method of manufacturing such an impeller (60).

According to the method for manufacturing the impeller (60) of this embodiment, the pitch between the first blade cavity (Cf1) and the third blade cavity (Cf3) is shorter than the pitch between the first blade cavity (Cf1) and the second blade cavity (Cf2), and the area of the slide surface (46) of the second slide mold (40B) is larger than the area of the slide surface (46) of the first slide mold (40A). The shorter the pitch of adjacent blade cavities (Cf), the stricter the restriction on the withdrawal direction (d2) of the slide mold (40) located between adjacent blade cavities (Cf). To address this, the area of the slide surface (46) of the slide mold (40) located between adjacent blade cavities (Cf) is increased as the pitch between the adjacent blade cavities (Cf) decreases, thereby relaxing the restriction on the withdrawal direction (d2) of the slide mold (40). Thus, the withdrawal direction (d2) of the first slide mold (40A) and the withdrawal direction (d2) of the second slide mold (40B) can be adjusted such that these slide molds (40) do not interfere with each other.

According to the method for manufacturing the impeller (60) of this embodiment, the plurality of slide molds (40) are identical in shape in 90% or more of the respective second molding surfaces (43). Thus, the plurality of blades (63) are identical in shape in 90% or more of the respective pressure surfaces (63p). According to this configuration, the plurality of blades (63) are different in shape in less than 10% of the respective pressure surfaces (63p); thus, degradation of air-delivery performance can be suppressed even when the impeller (60) for the centrifugal fan, in which the plurality of blades (63) are arranged at unequal pitches, is integrally molded.

According to the method for manufacturing the impeller (60) of this embodiment, the mold (5) of the injection molding apparatus (1) has six slide molds (40) and is used to manufacture the impeller (60) having six blades (63). If the number of blades (63) is five or less, the workload per blade (63) becomes relatively large, which tends to increase abnormal noise during air blowing. In addition, there is also a concern that the static pressure characteristics of the impeller (60) are degraded. When the static pressure characteristics of the impeller (60) are degraded, the number of rotations required for a required volume of air increases, and thus, the shaft power increases. In contrast, when the number of blades (63) is six or more, the static pressure characteristics of the impeller (60) can be maintained, thereby reducing the shaft power, while suitably reducing noise associated with the rotational operation of the impeller (60). In particular, the six blades (63) are suitable for ensuring the performance of the impeller (60) and establishing the molding method of this example.

### <<Other Embodiments>>

In the mold (5) of the injection molding apparatus (1), the portions at which the areas of the slide surfaces (46) differ among the slide molds (40) may be only the outer surface portion (42) of the first molding surface (41) or may be only the inner surface portion (44) of the second molding surface (43). In terms of reducing degradation of air-delivery performance of the impeller (60), it is preferable that the portion of the slide mold (40) at which the area of the slide surface (46) is different is only the outer surface portion (42) of the first molding surface (41) or a relatively small range of the inner surface portion (44) of the second molding surface (43).

In the mold (5) of the injection molding apparatus (1), the outer surface portions (42) of the first molding surfaces (41) or the inner surface portions (44) of the second molding surfaces (43) of some adjacent slide molds (40) may differ in the presence or absence of the slide surface (46). For example, the outer surface portions (42) of the first molding surfaces (41) and the inner surface portions (44) of the second molding surfaces (43) of the second slide mold (40B) and the third slide mold (40C) may have the slide surfaces (46) as in the above embodiment, while the outer surface portion (42) of the first molding surface (41) and the inner surface portion (44) of the second molding surface (43) of the first slide mold (40A) do not have to have the slide surface (46). In short, it is sufficient that, at the outer surface portion (42) of the first molding surface (41) or the inner surface portion (44) of the second molding surface (43), the presence or absence of the slide surface (46), or the area of the slide surface (46), differs between adjacent slide molds (40), so that the withdrawal directions (d2) of the slide molds (40) can be adjusted such that the adjacent slide molds (40) do not interfere with each other or with other portions of the mold (5).

The number of blades (63) of the impeller (60) may be five or less, or seven or more. However, as described above, the number of blades (63) is preferably six or more because the static pressure characteristics of the impeller (60) can be maintained and shaft power can be reduced while suitably reducing noise associated with rotation of the impeller (60). The pitches between adjacent blades (63) may differ among all the sets of the blades (63). The number of blades (63) may be any number as long as the plurality of blades (63) are arranged at unequal pitches, that is, as long as the pitch of adjacent blades (63) differs on both sides of each blade (63) in the circumferential direction.

In the mold (5) of the injection molding apparatus (1), the area of the slide surface (46) at the outer surface portion (42) of the first molding surface (41) of each slide mold (40) may be identical among all the slide molds (40), i.e., the first slide mold (40A), the second slide mold (40B), and the third slide mold (40C). In this case, the area of the flat surface (68) at the outer surface portion (42) of each blade (63) is identical among the first blade (63A), the second blade (63B), and the third blade (63C).

While the embodiments and variations thereof have been described above, it will be understood that various changes in form and details may be made without departing from the spirit and scope of the claims. The foregoing embodiments and variations thereof may be combined or replaced with each other without deteriorating the intended functions of the present disclosure.

### INDUSTRIAL APPLICABILITY

As described above, the present disclosure is useful for a method for manufacturing an impeller.

### DESCRIPTION OF REFERENCE CHARACTERS

- 5: Mold
- 10: Stationary Mold (First Mold)
- 30: Movable Mold (Second Mold)
- 40: Slide Mold
- 40A: First Slide Mold
- 40B: Second Slide Mold
- 41: First Molding Surface
- 42: Outer Surface Portion
- 43: Second Molding Surface
- 44: Inner Surface Portion
- 46: Slide Surface
- 47: Outer Peripheral Parting Line
- 60: Impeller
- 61: Base Plate
- 62: Shroud
- 63: Blade
- 63A: First Blade
- 63B: Second Blade
- 63C: Third Blade
- 63p: Pressure Surface
- 63s: Suction Surface
- Ac: Axis
- C: Cavity
- Cf: Blade Cavity
- Cf1: First Blade Cavity
- Cf2: Second Blade Cavity
- Cf3: Third Blade Cavity
- d1: Return Direction
- d2: Withdrawal Direction
- R: Resin

## Claims

1. A method for manufacturing an impeller (60) having: a base plate (61) configured to rotate about a predetermined axis (Ac); an annular shroud (62) spaced apart from the base plate (61) in an axial direction along the axis (Ac); and a plurality of blades (63) spaced apart from each other in a circumferential direction about the axis (Ac) between the base plate (61) and the shroud (62), each of the plurality of blades (63) having a cross-sectional shape extending so as to curve from an inner peripheral side toward an outer peripheral side in a cross section perpendicular to the axis (Ac), and a pitch of edges of adjacent blades (63) on the outer peripheral side in the circumferential direction being different on both sides of each of the blades (63) in the circumferential direction, the method comprising:
using a mold (5) having
a first mold (10) configured to mold a surface of the base plate (61) facing opposite to the shroud (62),
a second mold (30) configured to mold a surface of the shroud (62) facing opposite to the base plate (61), a surface of the base plate (61) facing the shroud (62), and part of a suction surface (63s) of each of the plurality of blades (63) facing an inside of the curve, and
a plurality of slide molds (40) each provided for a pair of adjacent blades (63) and configured to mold the other part of the suction surface (63s) of one of the pair of blades (63) and a pressure surface (63p) of the other blade (63) facing an outside of the curve,
the plurality of slide molds (40) each having a first molding surface (41) for molding the suction surface (63s) of the one blade (63) and a second molding surface (43) for molding the pressure surface (63p) of the other blade (63), each of the slide molds (40) being provided so as to be slidable in a return direction (d1) corresponding to a direction toward the axis (Ac) of the impeller (60) and in a withdrawal direction (d2) corresponding to a direction toward the outer peripheral side of the impeller (60);
a mold-clamping step of bringing the first mold (10) and the second mold (30) close to each other and sliding the plurality of slide molds (40) in the return direction (d1), thereby closing the mold (5) to form a cavity (C) and clamping the mold (5);
a molding step of filling the cavity (C) with molten resin (R) and cooling and solidifying the resin (R), thereby molding the impeller (60) in which the base plate (61), the shroud (62), and the plurality of blades (63) are integrated; and
a mold-opening step of sliding each of the plurality of slide molds (40) in the withdrawal direction (d2) and separating the first mold (10) and the second mold (30) from each other, thereby opening the mold (5), wherein
in a pair of adjacent slide molds (40), the presence or absence of a slide surface (46) extending parallel to a sliding direction of the respective slide mold (40), or an area of the slide surface (46), differs between the adjacent slide molds (40) at outer surface portions (42) of the respective first molding surfaces (41), each of the outer surface portions (42) being configured to mold a portion of the blade (63) closer to an outer peripheral edge, or at inner surface portions (44) of the respective second molding surfaces (43), each of the inner surface portions (44) being configured to mold a portion of the blade (63) closer to an inner peripheral edge.

2. The method of claim 1, wherein
the slide surface (46) is provided at the outer surface portion (42) of the first molding surface (41).

3. The method of claim 1 or 2, wherein
each of outer peripheral parting lines (47) of the first molding surface (41) and the second molding surface (43), each of the outer peripheral parting lines (47) forming the outer peripheral edge of the blade (63), is inclined with respect to a mold-opening direction of the first mold (10) and the second mold (30) so as to extend in a direction corresponding to a radially outward direction of the impeller (60) from the base plate (61) toward the shroud (62).

4. The method of any one of claims 1 to 3, wherein
the cavity (C) includes a plurality of blade cavities (Cf) for molding the respective blades (63),
the plurality of blade cavities (Cf) include a first blade cavity (Cf1) for molding a first blade (63A) of the plurality of blades (63), a second blade cavity (Cf2) for molding a second blade (63B) adjacent to the first blade (63A), and a third blade cavity (Cf3) for molding a third blade (63C) adjacent to the first blade (63A) on a side opposite to the second blade (63B),
the plurality of slide molds (40) include a first slide mold (40A) located between the first blade cavity (Cf1) and the second blade cavity (Cf2), and a second slide mold (40B) located between the first blade cavity (Cf1) and the third blade cavity (Cf3),
a pitch in a direction corresponding to the circumferential direction between the first blade cavity (Cf1) and the third blade cavity (Cf3) is shorter than a pitch in the direction corresponding to the circumferential direction between the first blade cavity (Cf1) and the second blade cavity (Cf2),
the first slide mold (40A) and the second slide mold (40B) have the slide surfaces (46) at portions corresponding to each other at the outer surface portions (42) of the first molding surfaces (41) or at the inner surface portions (44) of the second molding surfaces (43), and
an area of the slide surface (46) of the second slide mold (40B) is larger than an area of the slide surface (46) of the first slide mold (40A).

5. The method of any one of claims 1 to 4, wherein
the plurality of slide molds (40) are identical with each other in shape in 90% or more of the respective second molding surfaces (43).
